(19) Europäisches Patentamt
European Patent Office
Office européen des brevets

(11) **EP 3 069 184 B1**

(12) **EUROPÄISCHE PATENTSCHRIFT**

(45) Veröffentlichungstag und Bekanntmachung des Hinweises auf die Patenterteilung:
**08.11.2017 Patentblatt 2017/45**

(21) Anmeldenummer: **14796525.5**

(22) Anmeldetag: **13.11.2014**

(51) Int Cl.:
*G02B 21/00* (2006.01)   *G02B 21/02* (2006.01)
*G02B 21/08* (2006.01)   *G02B 27/00* (2006.01)

(86) Internationale Anmeldenummer:
**PCT/EP2014/074489**

(87) Internationale Veröffentlichungsnummer:
**WO 2015/071363 (21.05.2015 Gazette 2015/20)**

(54) **ANORDNUNG ZUR LICHTBLATTMIKROSKOPIE**

ASSEMBLY FOR LIGHT SHEET MICROSCOPY

SYSTÈME DE MICROSCOPIE À FEUILLE DE LUMIÈRE

(84) Benannte Vertragsstaaten:
**AL AT BE BG CH CY CZ DE DK EE ES FI FR GB GR HR HU IE IS IT LI LT LU LV MC MK MT NL NO PL PT RO RS SE SI SK SM TR**

(30) Priorität: **15.11.2013 DE 102013112596**

(43) Veröffentlichungstag der Anmeldung:
**21.09.2016 Patentblatt 2016/38**

(73) Patentinhaber: **Carl Zeiss Microscopy GmbH**
**07745 Jena (DE)**

(72) Erfinder:
• **SINGER, Wolfgang**
  **73431 Aalen (DE)**
• **SHAFER, David**
  **Fairfield, Connecticut 06824 (US)**
• **DEGEN, Artur**
  **07743 Jena (DE)**
• **SIEBENMORGEN, Jörg**
  **07743 Jena (DE)**

(74) Vertreter: **Patentanwälte Geyer, Fehners & Partner mbB**
**Sellierstrasse 1**
**07745 Jena (DE)**

(56) Entgegenhaltungen:
**WO-A1-2015/004108    WO-A2-2012/122027**
**US-A1- 2003 001 071    US-A1- 2004 173 760**

EP 3 069 184 B1

**Beschreibung**

Die Erfindung betrifft eine Anordnung zur Lichtblattmikroskopie. Eine solche Anordnung umfasst eine Beleuchtungsoptik mit einem Beleuchtungsobjektiv zur Beleuchtung einer Probe, welche sich auf einem Probenträger in einem Medium befindet, wobei der Probenträger - gelegentlich auch als Probengefäß mit seitlichen Wänden zur Aufnahme von Flüssigkeiten ausgestaltet - hinsichtlich einer ebenen Bezugsfläche ausgerichtet ist, über einen Beleuchtungsstrahlengang mit einem Lichtblatt, wobei die optische Achse des Beleuchtungsobjektivs und das Lichtblatt in einer Ebene liegen, die mit der Normalen der Bezugsfläche einen von Null verschiedenen Beleuchtungswinkel $\beta$ einschließt. Schließlich umfasst die Anordnung auch eine Detektionsoptik mit einem Detektionsobjektiv in einem Detektionsstrahlengang. Die optische Achse des Detektionsobjektivs schließt mit der Normalen der Bezugsfläche einen von Null verschiedenen Detektionswinkel $\delta$ ein. Die Anordnung umfasst darüber hinaus ein Trennschichtsystem mit mindestens einer Schicht aus einem vorgegebenen Material mit vorgegebener Dicke, welche das Medium von dem Beleuchtungs- und dem Detektionsobjektiv trennt. Das Trennschichtsystem ist dabei mit einer Grundfläche parallel zur Bezugsfläche ausgerichtet und steht mit dieser Grundfläche zumindest in dem für das Beleuchtungs- und Detektionsobjektiv für Beleuchtung bzw. Detektion zugänglichen Bereich mit dem Medium in Kontakt. Die Anordnung umfasst schließlich auch ein Korrekturlinsensystem mit mindestens einer Korrekturlinse, welches der Verringerung von solchen Aberrationen dient, die durch den schrägen Durchtritt von Beleuchtungslicht und / oder zu detektierendem Licht durch die Grenzflächen des Trennschichtsystems entstehen. Üblicherweise sind Beleuchtungs- und Detektionsobjektiv zwei verschiedene Objektive, sie können aber auch als sogenanntes Doppelobjektiv ausgestaltet sein, wie es beispielsweise in der EP 0 866 993 B1 beschrieben ist. Beide Objektive sind dann in einer gemeinsamen Baueinheit zusammengefasst, die jeweiligen Optiken - d.h. Objektive mit zugehörigen Strahlengängen und darin angeordneten optischen Elementen - teilen sich dann einige Elemente.

Eine solche Vorrichtung wird insbesondere bei der Untersuchung von biologischen Proben eingesetzt, bei der die Beleuchtung der Proben mit einem Lichtblatt, dessen Ebene die optische Achse der Detektion in einem von Null verschiedenen Winkel schneidet, erfolgt. Üblicherweise schließt dabei das Lichtblatt mit der Detektionsrichtung, die in der Regel der optischen Achse des Detektionsobjektivs entspricht, einen rechten Winkel ein. Mit dieser auch als SPIM (*Selective Plane illumination Microscopy*) bezeichneten Technik lassen sich in relativ kurzer Zeit räumliche Aufnahmen auch dickerer Proben erstellen. Auf der Basis von optischen Schnitten kombiniert mit einer Relativbewegung in einer Richtung senkrecht zur Schnittebene ist eine bildliche, räumlich ausgedehnte Darstellung der Probe möglich.

Die SPIM-Technik wird bevorzugt in der Fluoreszenzmikroskopie eingesetzt, wo sie dann auch als LSFM (*Lighf Sheet Fluorescence Microscopy*) bezeichnet wird. Gegenüber anderen etablierten Verfahren wie der konfokalen Laser-Scanning-Mikroskopie oder der Zwei-Photonen-Mikroskopie weist die LSFM-Technik mehrere Vorzüge auf. Da die Detektion im Weitbild erfolgen kann, lassen sich größere Probenbereiche erfassen. Zwar ist die Auflösung etwas geringer als bei der konfokalen Laser-Scanning-Mikroskopie, jedoch lassen sich mit der LSFM-Technik dickere Proben analysieren, da die Eindringtiefe höher ist. Darüber hinaus ist die Lichtbelastung der Proben bei diesem Verfahren am geringsten, was unter anderem die Gefahr des Ausbleichens einer Probe reduziert, da die Probe nur durch ein dünnes Lichtblatt in einem von Null verschiedenen Winkel zur Detektionsrichtung beleuchtet wird.

Dabei kann sowohl ein statisches Lichtblatt, welches beispielsweise mit Hilfe von Zylinderlinsen erzeugt wird, verwendet werden, als auch ein quasi-statisches Lichtblatt. Dieses kann erzeugt werden, indem die Probe mit einem Lichtstrahl schnell abgetastet wird. Die lichtblattartige Beleuchtung entsteht, indem der Lichtstrahl einer sehr schnellen Relativbewegung zu der beobachteten Probe unterworfen wird, und dabei zeitlich aufeinanderfolgend mehrfach aneinandergereiht wird. Dabei wird die Integrationszeit der Kamera, auf deren Sensor die Probe letztendlich abgebildet wird, so gewählt, dass die Abtastung innerhalb der Integrationszeit abgeschlossen wird. Anstelle einer Kamera mit einem zweidimensionalen Sensorfeld kann auch ein Zeilensensor in Kombination mit einem erneuten Abtasten (*Rescan*) in der Detektionsoptik verwendet werden. Außerdem kann die Detektion auch konfokal erfolgen.

Die SPIM-Technik ist in der Literatur inzwischen vielfach beschrieben, beispielsweise in der DE 102 57 423 A1 und der darauf aufbauenden WO 2004/053558 A1 oder in dem Übersichtsartikel "Selective plane illumination microscopy techniques in developmental biology" von J. Huisken et al., erschienen im Jahr 2009 in der Zeitschrift Development, Bd. 136, S. 1963.

Eine der Hauptanwendungen der Lichtblattmikroskopie liegt in der Bildgebung mittelgroßer Organismen mit einer Größe von einigen 100 $\mu$m bis hin zu wenigen Millimetern. In der Regel werden diese Organismen in ein Agarose-Gel eingebettet, welches sich wiederum in einer Glaskapillare befindet. Die Glaskapillare wird von oben bzw. von unten in eine wassergefüllte Probenkammer eingebracht und die Probe ein Stück aus der Kapillare herausgedrückt. Die Probe in der Agarose wird mit einem Lichtblatt beleuchtet und die Fluoreszenz mit einem Detektionsobjektiv, das senkrecht zum Lichtblatt und damit auch senkrecht zur Lichtblattoptik steht, auf einer Kamera abgebildet.

Diese Methode der Lichtblattmikroskopie hat drei große Nachteile. Zum einen sind die zu untersuchenden Proben relativ groß, sie stammen aus der Entwicklungsbiologie. Außerdem ist aufgrund der Probenpräparation und der Abmessungen der Probenkammer das Lichtblatt relativ dick und somit die erzielbare axiale Auflösung eingeschränkt. Zusätzlich ist die Probenpräparation aufwendig und nicht kompatibel zu Standard-Probenpräparationen und zu Standard-Probenhalterungen, wie sie in der Fluoreszenzmikroskopie zur Untersuchung einzelner Zellen üblich sind.

Um diese Einschränkungen zumindest teilweise umgehen zu können, wurde in den letzten Jahren ein SPIM-Aufbau realisiert, bei dem das Beleuchtungsobjektiv und das Detektionsobjektiv senkrecht zueinander stehen und unter einem Winkel von jeweils 45° von oben auf die Probe gerichtet sind. Zieht man als Bezugsfläche beispielsweise die Ebene eines Tisches heran, auf dem die Probenhalterung gelagert ist, oder eine andere, meist horizontale Ebene, so betragen der Beleuchtungswinkel $\beta$ und der Detektionswinkel $\delta$ jeweils 45°. Ein solcher Aufbau wird beispielsweise in der WO 2012/110488 A2 und in der WO 2012/122027 A2 beschrieben.

Die Probe befindet sich bei solchen Aufbauten beispielsweise auf dem Boden einer Petrischale. Die Petrischale ist mit Wasser gefüllt, Beleuchtungsobjektiv und Detektionsobjektiv werden in die Flüssigkeit eingetaucht, das Wasser übernimmt auch die Funktion einer Immersionsflüssigkeit. Dieser Ansatz bietet den Vorteil einer höheren Auflösung in axialer Richtung, da ein dünneres Lichtblatt erzeugt werden kann. Aufgrund der höheren Auflösung können dann auch kleinere Proben untersucht werden. Auch ist die Probenpräparation bedeutend einfacher geworden. Dennoch entsprechen Probenpräparationen und Probenhalterungen weiterhin noch nicht dem Standard, wie er in der Fluoreszenzmikroskopie bei einzelnen Zellen derzeit gültig ist. So muss die Petrischale relativ groß sein, damit die beiden Objektive in die Schale eingetaucht werden können, ohne an den Rand der Schale anzustoßen. Mikrotiterplatten - auch als *Multi-Well-Platten* bezeichnet -, die Standard in vielen Bereichen der Biologie sind und gerade auch bei der fluoreszenzmikroskopischen Analyse einzelner Zellen eingesetzt werden, können mit diesem Verfahren nicht verwendet werden, da die Objektive nicht in die sehr kleinen Vertiefungen, welche rasterförmig auf der Platte angeordnet sind, eintauchen können. Ein weiterer Nachteil besteht darin, dass mit diesem Aufbau eine Analyse einer Vielzahl von Proben in kurzer Zeit (*High Throughput-Screening*) nicht ohne weiteres möglich ist, da die Objektive beim Wechseln der Probe gereinigt werden müssen, um Kontaminierungen der verschiedenen Proben zu vermeiden.

Ein Weg zur Beseitigung dieser Nachteile liegt darin, auf der einen Seite die Konfiguration von $\beta = \delta = 45°$ beizubehalten, aber die beiden Objektive nicht von oben auf die Probe zu richten, sondern nach Art eines inversen Mikroskops von unten, wo Beleuchtung und Detektion dann durch den transparenten Boden des Probengefäßes erfolgen. Dieser transparente Boden mit der Luftschicht, die sich zwischen Boden und Objektiven befindet, bildet dann das Trennschichtsystem. Äquivalent kann die Detektion auch weiterhin von oben erfolgen, sofern das Probengefäß mittels eines transparenten Deckels abgedeckt ist, oder auch ohne einen solchen Deckel - in diesem Fall besteht das Trennschichtsystem nur aus einer Luftschicht. Auf diese Weise können alle typischen Probengefäße, wie beispielsweise Mikrotiterplatten, Petrischalen und Objektträger benutzt werden, insbesondere eine Kontaminierung der Proben bei einer Analyse mit hohem Durchsatz ist nicht mehr möglich.

Dieser Vorteil wird jedoch mit einem weiteren schwerwiegenden Nachteil erkauft, da es aufgrund der Verwendung des Trennschichtsystems - beispielsweise des Deckglases oder des Gefäßbodens mit anschließender Luftschicht - schon bei geringen numerischen Aperturen, beispielsweise schon bei NA = 0,3, zu extremen Abbildungsfehlern wie beispielsweise sphärischer Aberration, Koma und Astigmatismus aufgrund des schrägen Durchgangs durch das Trennschichtsystem kommt und somit eine korrekte Bildgebung bei Nutzung von Standardobjektiven nicht möglich ist.

In der DE 10 2013 107 297.6 wurde zur Beseitigung dieser Nachteile vorgeschlagen, Korrekturmittel in Form von Korrekturlinsen oder Linsengruppen in das Beleuchtungsobjektiv und / oder in das Detektionsobjektiv zu integrieren. Als Korrekturlinsen werden dort beispielsweise Zylinderlinsen, gegen die optische Achse verkippte Linsen, nicht axial angeordnete Linsen vorgeschlagen, wobei die Korrekturlinsen auch solche Elemente mit asphärischen Flächen oder mit Freiformflächen umfassen. Außerdem werden für den Objektträger Materialien verwendet, die annähernd den Brechungsindex von Wasser haben, wobei zur Beseitigung weiterer Fehler adaptive optische Elemente zur Manipulation der Phasenfronten des Beleuchtungs- und / oder des Detektionslichtes vorgeschlagen werden. In einem Artikel von Victor J. Doherty und David Shafer mit dem Titel "Simple Method of Correcting the Aberrations of a Beam Splitter in Converging Licht", erschienen in Proc. of SPIE, Vol. 0237, International Lens Design, erschienen 1980, und in dem darauf basierenden Patent US 4,412,723 wird vorgeschlagen, Aberrationen in der Luft beim schiefen Durchgang durch einen Strahlteiler, welcher in diesem Zusammenhang als Objektträger aufgefasst werden kann, zu korrigieren. Weitere Korrekturvorrichtungen werden in US 2003/0001071 A1 und US 2004/0173760 A1 vorgeschlagen. Aufgabe der Erfindung ist es, die Abbildungsfehler, die beim schiefen Durchgang von Beleuchtungs- und Detektionslicht durch den Objektträger, den Boden des Probengefäßes oder ein Deckglas entstehen, durch ein möglichst einfach gestaltetes Korrekturlinsensystem zu beseitigen, welches insbesondere auch die Weiterverwendung bereits vorhandener Objektive ermöglichen soll.

Diese Aufgabe wird bei einer Anordnung zur Lichtblattmikroskopie der eingangs beschriebenen Art dadurch gelöst, dass das Korrekturlinsensystem zwischen Beleuchtungsobjektiv und Trennschichtsystem und / oder zwischen Detektionsobjektiv und Trennschichtsystem angeordnet ist. Dies ermöglicht die einfache Nachrüstung bestehender Objektivsätzen mit dem Korrekturlinsensystem, welches an das jeweils verwendete Deckglas angepasst sein muss. Das Korrekturlinsensystem kann beispielsweise die Abbildung von Wasser durch das Deckglas in Wasser oder Luft korrigieren. Dabei ist es ausreichend, das Korrekturlinsensystem nur an das verwendete Deckglas anzupassen; eine gesonderte Anpassung an verwendete Objektive muss nicht zwingend erfolgen, kann aber durchgeführt werden um eine noch bessere Korrektur zu erreichen. Die Fokussierung erfolgt dann beispielsweise, indem das Objektiv zusammen mit dem Korrekturlinsensystem axial entlang der Normalen der Bezugsfläche bewegt wird, wobei die Fokussierung des Objektivs auch durch Innenfokussierung vorgenommen werden kann, in diesem Fall erfolgt keine Bewegung. Das Korrekturlinsensystem ist bevorzugt mit dem Objektiv starr verbunden und wird mit diesem bewegt. Sofern eine Anpassung an verschiedene Objektive nicht nötig ist, kann das Korrekturlinsensystem auch unabhängig von den Objektiven bereitgestellt und beispielsweise in eine dafür vorgesehene Halterung am Probengefäß, am Probentisch oder an einer anderen passenden Stelle im Mikroskopaufbau integriert werden. Erfindungsgemäß ist die mindestens eine Linse des Korrekturlinsensystems sowohl im Beleuchtungs- als auch im Detektionsstrahlengang angeordnet. Es werden dann also dieselben Korrekturlinsen sowohl für die Korrektur des Beleuchtungsstrahlengangs als auch des Detektionsstrahlengangs verwendet. Auf diese Weise lässt sich die Anzahl der zu verwendenden Linsen reduzieren, der technische Aufwand bei der Herstellung und Montage sowie der Kostenaufwand werden dadurch reduziert. Das Korrekturlinsensystem kann beispielsweise aus mehreren Linsen zusammengesetzt sein, deren Formen an Hemisphären erinnern, wobei die Linsenflächen nicht notwendig sphärisch, sondern bevorzugt sogar asphärisch oder frei geformt sein können.

In einer weiteren bevorzugten Ausgestaltung umfasst die Anordnung zur Lichtblattmikroskopie ein weiteres Detektionsobjektiv in einem weiteren Detektionsstrahlengang, wobei die mindestens eine Linse des Korrekturlinsensystems auch im weiteren Detektionsstrahlengang angeordnet ist. In diesem Fall teilen sich beide Detektionsobjektive und das Beleuchtungsobjektiv ein und dasselbe Korrekturlinsensystem. Die optischen Achsen der drei Objektive schließen dann jeweils paarweise miteinander einen Winkel von 90° ein und sind hinsichtlich der Normalen der Bezugsfläche, die beispielsweise durch die Ebene definiert wird, in der sich der Gefäßboden oder das Deckglas befindet, um 45° geneigt. Alle drei Objektive dienen dabei abwechselnd als Beleuchtungsobjektiv, die übrigen beiden als Detektionsobjektive. Durch rechnergestützte Verknüpfung der Einzelbilder lässt sich dann ein Gesamtbild mit einer höheren Auflösung in der Tiefe bestimmen.

In einer weiteren bevorzugten Ausgestaltung ist das Korrekturlinsensystem die Probe vergrößernd abbildend ausgestaltet. Neben der Korrektur für den schiefen Durchtritt des Beleuchtungs- bzw. Detektionslichtes wird also zusätzlich auch ein vergrößertes Abbild erzeugt. Dies hat den Vorteil, dass die numerische Apertur hinter dem Korrekturelement dadurch verringert wird, was es wiederum ermöglicht, ein Detektionsobjektiv mit geringerer numerischer Apertur zu verwenden, was zum einen größere Arbeitsabstände erlaubt und zum anderen die Anforderungen an die Korrektur etwas verringert, da sich die Abbildungsfehler in den Außenbereichen der Linsen, also insbesondere bei großer numerischer Apertur, besonders stark bemerkbar machen.

Weitere, besonders angepasste Ausführungsformen des Korrekturlinsensystems sind in weiteren Unteransprüchen angegeben. Beispielsweise kann das Korrekturlinsensystem aus zwei oder mehreren sphärischen und/oder asphärischen Linsen zusammengesetzt sein, oder auch nur eine Linse umfassen, bei der dann eine oder beide Linsenflächen asphärisch geformt sind.

Es versteht sich, dass die vorstehend genannten und die nachstehend noch zu erläuternden Merkmale nicht nur in den angegebenen Kombinationen, sondern auch in anderen Kombinationen oder in Alleinstellung einsetzbar sind, ohne den Rahmen der vorliegenden Erfindung zu verlassen.

Nachfolgend wird die Erfindung beispielsweise anhand der beigefügten Zeichnungen, die auch erfindungswesentliche Merkmale offenbaren, noch näher erläutert. Es zeigen:

Fig.1    den prinzipiellen Aufbau einer Lichtblattmikroskopieanordnung mit Korrekturlinsensystem,
Fig.2    eine erste besondere Ausgestaltung einer solchen Anordnung,
Fig.3    eine weitere besondere Ausgestaltung einer solchen Anordnung,
Fig.4    ein erstes Korrekturlinsensystem im Detail,
Fig.5    ein zweites Korrekturlinsensystem im Detail und
Fig.6    ein drittes Korrekturlinsensystem im Detail.

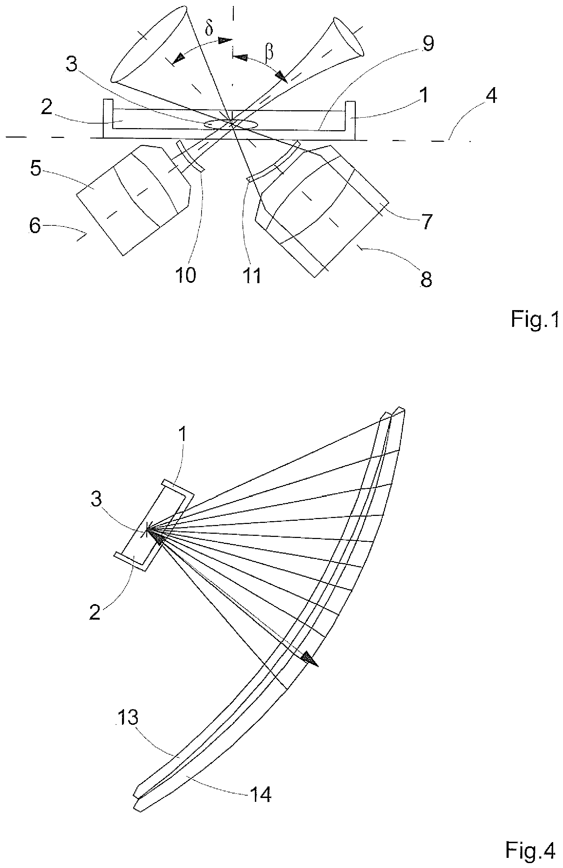

Fig.1 zeigt zunächst den grundsätzlichen Aufbau einer Anordnung zur Lichtblattmikroskopie. Diese Anordnung umfasst hier einen als Probengefäß 1, beispielsweise als Petri-Schale ausgestalteten Probenträger zur Aufnahme einer in einem Medium 2 - beispielsweise Wasser oder einer Nährlösung - befindlichen Probe 3. Das Probengefäß 1 ist dabei hinsichtlich einer ebenen Bezugsfläche 4 ausgerichtet. Diese ebene Bezugsfläche 4 wird hier durch den Boden des Probengefäßes 1 gebildet. Anstelle des Probengefäßes 1 können auch andere Probenträger, wie übliche Objektträger in Plattenform, verwendet werden, oder auch Gefäße für hohen Durchsatz, wie Mikrotiter-Platten. Die Anordnung zur Lichtblattmikroskopie umfasst außerdem eine Beleuchtungsoptik mit einem Beleuchtungsobjektiv 5 zur Beleuchtung der Probe 3 über einen Beleuchtungsstrahlengang mit einem Lichtblatt, wobei die optische Achse 6 des Beleuchtungsobjektivs 5 und das Lichtblatt in einer Ebene liegen, die mit der Normalen der Bezugsfläche 4 einen von Null verschiedenen Beleuchtungswinkel β einschließt. Die Anordnung umfasst außerdem eine Detektionsoptik mit einem Detektionsobjektiv 7 in einem Detektionsstrahlengang, dessen optische Achse 8 mit der Normalen der Bezugsfläche 4 einen von Null verschiedenen Detektionswinkel δ einschließt. Die Anordnung umfasst schließlich auch ein Trennschichtsystem mit mindestens einer Schicht aus einem vorgegebenen Material mit vorgegebener Dicke, welche das Medium 2 von dem Beleuchtungsobjektiv 5 und dem Detektionsobjektiv 7 trennt. Das Trennschichtsystem weist dabei eine parallel zur Bezugsfläche ausgerichtete Grundfläche 9 auf, mit welcher es zumindest in dem für das Beleuchtungsobjektiv 5 und das Detektionsobjektiv 7 für Beleuchtung bzw. Detektion zugänglichen Bereich mit dem Medium 2 in Kontakt steht. Das Trennschichtsystem besteht hier aus dem Gefäßboden, dessen Dicke und Materialzusammensetzung in der Regel bekannt sind, sowie einem weiteren Medium unterhalb des Gefäßbodens. Dieses weitere Medium kann Luft sein, ist aber bevorzugt Wasser oder eine wässrige Lösung, beispielsweise eine physiologische Kochsalzlösung, die den Bereich zwischen dem Gefäßboden und der probennächsten Linse des Korrekturlinsensystems ausfüllt. Auch der restliche Bereich kann mit einem flüssigen weiteren Medium ausgefüllt sein, so dass sich das Korrekturlinsensystem vollständig in diesem weiteren Medium befindet. Letzteres ist insbesondere dann bei flüssigen Medien sinnvoll, wenn es sich bei den Objektiven, an die das Korrekturlinsensystem gekoppelt werden soll, um Immersionsobjektive handelt. Die Grundfläche 9 wird von der dem Medium 2 zugewandten Oberseite des Gefäßbodens gebildet. Anstelle der hier gezeigten inversen Konfiguration kann auch eine aufrechte Konfiguration verwendet werden, bei welchem das Trennschichtsystem unter anderem eine Abdeckung in Form eines Gefäßdeckels für das Probengefäß 1 umfassen kann. Auf eine solche Abdeckung kann auch verzichtet werden, die Grundfläche würde in diesem Fall der Oberfläche des Mediums 2 entsprechen, das Trennschichtsystem bestünde in diesem Fall nur aus einer Wasserschicht.

Die Anordnung zur Lichtblattmikroskopie umfasst schließlich auch ein Korrekturlinsensystem mit mindestens einer Korrekturlinse zur Verringerung von solchen Abberationen, welche durch den schrägen Durchtritt von Beleuchtungslicht und / oder zu detektierendem Licht durch Grenzflächen des Trennschichtsystems entstehen. Das Korrekturlinsensystem ist entweder zwischen Beleuchtungsobjektiv und Trennschichtsystem, oder zwischen Detektionsobjektiv und Trennschichtsystem, oder zwischen beiden Objektiven und dem Trennschichtsystem angeordnet, je nachdem, mit welchem Aufwand die Abbildungsfehler korrigiert werden sollen. Dabei ist die numerische Apertur des Beleuchtungsobjektivs in der Regel kleiner als die des Detektionsobjektivs, so dass man Korrekturen eher im Detektionsstrahlengang vornehmen wird, oder in beiden Strahlengängen. Im vorliegenden Fall ist das Korrekturlinsensystem sowohl zwischen Beleuchtungsobjektiv 5 und Trennschichtsystem als auch zwischen Detektionsobjektiv 7 und Trennschichtsystem angeordnet. Es umfasst zwei einzelne Korrekturlinsen 10 und 11, eine erste Korrekturlinse 10 ist zwischen dem Beleuchtungsobjektiv 5 und dem Trennschichtsystem angeordnet, eine zweite Korrekturlinse 11 ist zwischen Detektionsobjektiv 7 und dem Trennschichtsystem angeordnet. Die Korrekturlinsen 10, 11 können sphärische, asphärische oder frei geformte Flächen aufweisen, das Korrekturlinsensystem kann auch mehrere Linsen pro Strahlengang umfassen.

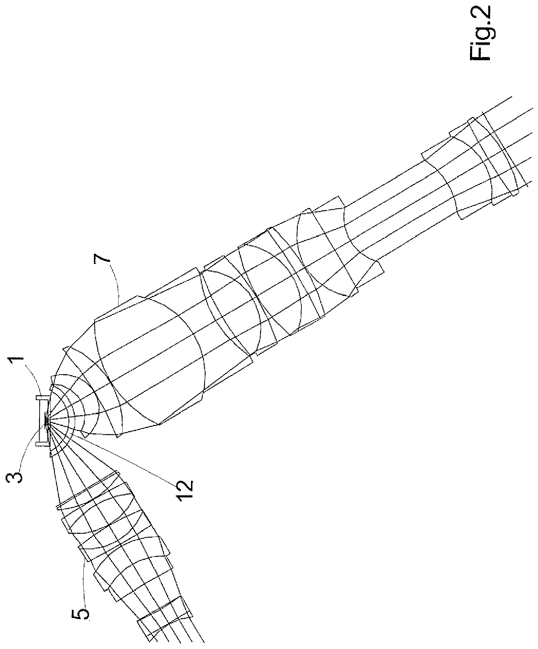

In einer besonders bevorzugten Ausgestaltung, die in Fig.2 gezeigt ist, ist eine Korrekturlinse 12 sowohl im Beleuchtungs- als auch im Detektionsstrahlengang angeordnet. Das Beleuchtungsobjektiv 5 und das Detektionsobjektiv 7 teilen sich also die Korrekturlinse 12. Bei der Korrekturlinse 12 kann beispielsweise eine der beiden Flächen asphärisch ausgestaltet sein. Die numerische Apertur des Beleuchtungsobjektivs 5 beträgt bevorzugt 0,5, die numerische Apertur des Detektionsobjektivs 7 beträgt vorzugsweise 1,0. Der Arbeitsabstand zwischen Probe und Detektionsobjektiv 7 liegt bei 8 mm. Da das Beleuchtungsobjektiv kompakter gebaut werden kann, ist es möglich, das Detektionsobjektiv in einem kleineren Winkel zur Normalen der Bezugsfläche 4 anzuordnen, dieser Winkel beträgt hier 32°. Die Einstrahlung des Beleuchtungslichts erfolgt dann mit einem entsprechend größeren Beleuchtungswinkel β = 58°, sofern eine rechtwinklige Konfiguration beibehalten werden soll, was jedoch nicht zwingend ist.

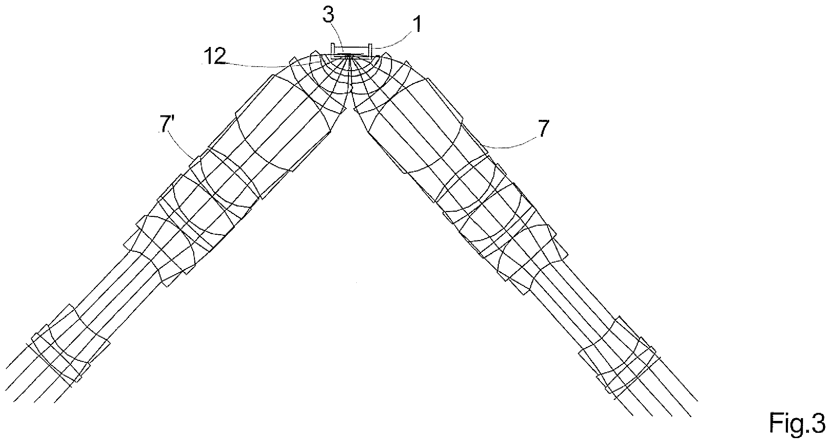

Eine ähnliche Ausgestaltung ist in Fig.3 gezeigt, die hier gezeigte Anordnung umfasst einen weiteren Detektionsstrahlengang mit einem weiteren Detektionsobjektiv 7', die Korrekturlinse 12 des Korrekturlinsensystems ist auch in diesem Strahlengang angeordnet. Auf die Darstellung des dritten baugleichen Objektivs wurde der Übersichtlichkeit halber verzichtet, die Korrekturlinse 12 steht jedoch auch diesem Objektiv zur Verfügung. Alle drei Objektive dienen wechselweise der Beleuchtung, die beiden übrigen dann der Detektion. Auch hier ist eine der Flächen der Korrekturlinse 12 asphärisch ausgestaltet. Der Arbeitsabstand beträgt jeweils 8 mm bei einer numerischen Apertur von NA = 0,86 in Wasser, wodurch mechanische Kollisionen vermieden werden können, beide Detektionsobjektive 7, 7' sind identisch aufgebaut. Darüber hinaus kann das Korrekturlinsensystem die Probe vergrößernd abbildend ausgestaltet werden, wenn es die Probe in Luft abbildet und ein sich daran anschließendes Luftobjektiv verwendet wird. Dies ermöglicht es gerade bei dieser Konfiguration, bei der mehrere Detektionsobjektive 7, 7' verwendet werden, deren numerische Aperturen zu verringern.

In den Figuren 4-6 sind weitere Ausgestaltungen von Korrekturlinsensystemen gezeigt, welche besonders insbesondere im Hinblick auf die verwendeten Materialien und deren Dicke im Trennschichtsystem optimiert sind.

In Fig.4 ist ein Korrekturlinsensystem gezeigt, welches zwei sphärische Linsen 13 und 14 umfasst. Der Abstand zwischen Probe und Scheitel der Linse 14 normal zur Bezugsfläche beträgt 5,58 mm. Als Material für den Glasboden des Probengefäßes 1 wurde dabei Kronglas N-K5 mit einer Dicke von 170 $\mu$m verwendet. Bei einer Wellenlänge von $\lambda_e$ = 546,07 nm beträgt der Brechungsindex $n_e$ = 1,5246 und die Abbezahl $\nu_e$ = 59,22. Eine besonders gute Korrektur ergibt sich dann, wenn die der Probe nähere sphärische Linse 13 aus dem Glas S-FPL53 mit dem Brechungsindex $n_e$ = 1,4399 und der Abbezahl $\nu_e$ = 94,49 gefertigt und die dem Objektiv zugewandte sphärische Linse 14 aus dem Material N-FK5, welches von der Firma Schott angeboten wird und bei einer Wellenlänge von $\lambda_d$ = 578,58 nm eine Brechzahl $n_d$ = 1,48749 und eine Abbesche Zahl $v_d$ = 70,41 aufweist, sowie einen Brechungsindex $n_e$ = 1,4891 und eine Abbezahl $\nu_e$ = 70,23.

Die vier Radien der Linsenflächen betragen, von der Objektseite beginnend $r_1$ = -16.42 mm, $r_2$ = -17,04 mm, $r_3$ = -14.70 mm und $r_4$ = -13.95 mm. Dieses Korrekturlinsensystem ist besonders für eine Verwendung mit der in Fig.2 gezeigten Konfiguration geeignet, bei der der Detektionswinkel $\delta$ = 32° und die numerische Apertur des Detektionsobjektivs zumindest in sagittaler Richtung NA = 1 beträgt. Die Dicke der Linse 13 beträgt 0,27. cm, die Dicke der Linse 14 beträgt 0,43 cm, jeweils am Scheitelpunkt. Das Korrekturlinsensystem ist darauf ausgelegt, in Wasser oder einer physiologischen Kochsalzlösung verwendet zu werden, beide Linsen sind von Wasser umgeben.

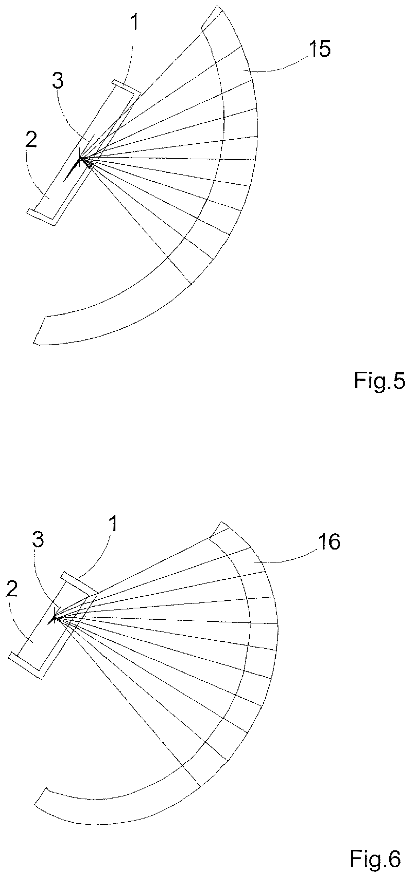

Eine weitere Ausgestaltung eines Korrekturlinsensystems ist in Fig.5 gezeigt. Das Korrekturlinsensystem umfasst hier eine asphärische Linse 15, auch dieses Korrekturlinsensystem ist insbesondere zur Verwendung in einem Aufbau wie in Fig.2 gezeigt geeignet. Material und Dicke des Gefäßbodens sind dieselben wie in Bezug auf Fig.4 genannt. Der Abstand zwischen der Probe 3 und der äußeren, dem Objektiv zugewandten Linsenfläche, bei der es sich auch um die asphärisch geformte Fläche handelt, beträgt hier 6 mm. Als Material für die Linse wurde Borsilikat-Kronglas (BK7) mit einem Brechungsindex $n_d$ = 1,5168 und einer Abbezahl von $v_d$ = 64,17 verwendet. Der Radius der sphärischen konkaven Fläche beträgt r = -7.122 mm, die Dicke im Scheitelpunkt beträgt 1,267 mm. Die konvexe, dem Objektiv zugewandte Fläche ist asphärisch geformt. Die asphärisch geformte Fläche, hier eine roatationssymmetrische Kegelschnittasphäre, wird dabei durch die Beziehung

$$f(h) = \frac{\rho h^2}{1 + \sqrt{1 - (1 + K) \cdot (\rho h)^2}} + \sum_{i=2}^{N} c_{2i} h^{2i}$$

beschrieben. $K$ ist die konische Konstante, i und N sind natürliche Zahlen. $c_{2i}$ bezeichnet die Koeffizienten eines Polynoms in $h$. Für $\rho$ gilt die Beziehung $\rho$ = 1/R, und R bezeichnet den Radius einer gedachten Kegelschnittfläche am Scheitelpunkt dieser Fläche, d.h. den Abstand des Scheitelpunkts zum nächstgelegenen Brennpunkt. Dabei liegen sowohl der Scheitelpunkt als auch die Brennpunkte der Kegelschnittfläche auf der optischen Achse. h bezeichnet den Abstand zur optischen Achse, an der der Wert der Funktion $f(h)$ bestimmt wird, bei $f$ handelt es sich um den Abstand der Linsenoberfläche von einer lotrecht auf der optischen Achse im Scheitelpunkt der Kegelschnittfläche stehenden Ebene beim Abstand h von der optischen Achse. Die Koeffizienten $c_{2i}$, die konische Konstante $K$ und der Radius $R$ werden iterativ bestimmt. Im vorliegenden Beispiel beträgt der Wert der konischen Konstante $K$ = 0,11078 und der Scheitelradius liegt bei R = -8,0179 mm. Wenn man eine übliche Linsenhöhe von ca. 30 mm ansetzt, ergeben sich die folgenden Koeffizienten des Polynoms in h bis i = 3 : $c_2$ = 2,705116 $10^{-5}$, $c_4$ = 6,481283 · $10^{-9}$ und $c_6$ = 6,796660 · $10^{-9}$.

Ein weiteres Beispiel für ein Korrekturlinsensystem ist schließlich in Fig.6 dargestellt, die hier verwendete Korrekturlinse ist als asphärische Linse 16 ausgestaltet. Sie ist ebenfalls für die Verwendung in einer lichtblattmikroskopischen Anordnung nach Fig.2 geeignet, bei der der Detektionswinkel $\delta$ = 32° und die numerische Apertur des Detektionsobjektivs 7 NA = 1 beträgt. Im Unterschied zu dem Beispiel, welches im Zusammenhang mit Fig.5 beschrieben wurde, sind bei der asphärischen Linse 16 beide Flächen, sowohl die konvexe als auch die konkave Fläche, asphärisch geformt. Die Materialien für den Gefäßboden des Probengefäßes 1 und für die asphärische Linse entsprechen den bereits im Zusammenhang mit Fig.5 beschriebenen Materialien. Der bevorzugte Abstand zwischen der Probe 3 und der äußeren, konvex geformten Fläche der asphärischen Linse beträgt 5,49 mm. Für die konkav geformte asphärische Fläche ergeben sich folgende Werte: R = -5,294509, K = 1,126334, $c_2$ = -5,580368 · $10^{-3}$, $c_4$ = 6,292423 · $10^{-4}$ und $c_6$ = -2,478332 · $10^{-5}$. Für die konvex geformte asphärische Fläche ergeben sich folgende Werte: R = -5,806469, K = 0,97766412, $c_2$ = -3,220212, $c_4$ = 2,780769 · $10^{-4}$ und $c_6$ = -8,263956 · $10^{-6}$.

**Bezugszeichenliste**

| | |
|---|---|
| 1 | Probengefäß |
| 2 | Medium |
| 3 | Probe |
| 4 | Bezugsfläche |
| 5 | Beleuchtungsobjektiv |
| 6 | optische Achse |
| 7, 7' | Detektionsobjektiv |
| 8 | optische Achse |
| 9 | Grundfläche |
| 10 | Korrekturlinsen |
| 11 | Korrekturlinse |

12        Korrekturlinse
13, 14    sphärische Linse
15, 16    asphärische Linse

β         Beleuchtungswinkel
ö         Detektionswinkel


**Patentansprüche**

1.   Anordnung zur Lichtblattmikroskopie, umfassend

     - eine Beleuchtungsoptik mit einem Beleuchtungsobjektiv (5) zur Beleuchtung einer auf einem Probenträger in einem Medium (2) befindlichen Probe (3), wobei der Probenträger hinsichtlich einer horizontalen, ebenen Bezugsfläche (4) ausgerichtet ist, über einen Beleuchtungsstrahlengang mit einem Lichtblatt, wobei die optische Achse (6) des Beleuchtungsobjektivs (5) und das Lichtblatt in einer Ebene liegen, die mit der Normalen der Bezugsfläche (4) einen von Null verschiedenen Beleuchtungswinkel (β) einschließt,
     - eine Detektionsoptik mit einem Detektionsobjektiv (7) in einem Detektionsstrahlengang, dessen optische Achse (8) mit der Normalen der Bezugsfläche (4) einen von Null verschiedenen Detektionswinkel (δ) einschließt,
     - ein Trennschichtsystem mit mindestens einer Schicht aus einem vorgegebenen Material mit vorgegebener Dicke, welche das Medium (2) von dem Beleuchtungsobjektiv (5) und dem Detektionsobjektiv (7) trennt, wobei das Trennschichtsystem mit einer parallel zur Bezugsfläche (4) ausgerichteten Grundfläche (9) zumindest in dem für das Beleuchtungsobjektiv (5) und das Detektionsobjektiv (7) für Beleuchtung bzw. Detektion zugänglichen Bereich mit dem Medium (2) in Kontakt steht, **dadurch gekennzeichnet, dass**
     - die Anordnung ein Korrekturlinsensystem mit mindestens einer Korrekturlinse (10, 11, 12) zur Verringerung von solchen Aberrationen, welche durch den schrägen Durchtritt von Beleuchtungslicht und/oder zu detektierendem Licht durch Grenzflächen des Trennschichtsystems entstehen, umfasst, wobei
     - das Korrekturlinsensystem zwischen Beleuchtungsobjektiv (5) und Trennschichtsystem und zwischen Detektionsobjektiv (7) und Trennschichtsystem angeordnet ist und
     - dieselbe mindestens eine Korrekturlinse (12) sowohl im Beleuchtungs- als auch im Detektionsstrahlengang angeordnet ist.

2.   Anordnung nach Anspruch 1, umfassend einen weiteren Detektionsstrahlengang mit einem weiteren Detektionsobjektiv (7'), wobei die mindestens eine Korrekturlinse (12) des Korrekturlinsensystems auch im weiteren Detektionsstrahlengang angeordnet ist.

3.   Anordnung nach einem der Ansprüche 1 oder 2, **dadurch gekennzeichnet, dass** das Korrekturlinsensystem die Probe (3) vergrößernd abbildend ausgestaltet ist.

4.   Anordnung nach einem der Ansprüche 1 bis 3, **dadurch gekennzeichnet, dass** das Korrekturlinsensystem aus einer ersten und einer zweiten sphärischen Linsen (13, 14) zusammengesetzt ist.

5.   Anordnung nach einem der Ansprüche 1 bis 3, **dadurch gekennzeichnet, dass** das Korrekturlinsensystem eine Linse mit mindestens einer asphärischen Fläche umfasst.


**Claims**

1.   Arrangement for light sheet microscopy, comprising

     - an illumination optical system with an illumination objective (5) for illuminating a sample (3) situated on a sample carrier in a medium (2), wherein the sample carrier is aligned with respect to a horizontal, plane reference surface (4), via an illumination beam path with a light sheet, wherein the optical axis (6) of the illumination objective (5) and the light sheet lie in a plane which, with the normal to the reference surface (4), forms an illumination angle (ß) which is different from zero,
     - a detection optical system with a detection objective (7) in a detection beam path, the optical axis (8) of which, with the normal to the reference surface (4), forms a detection angle (δ) which is different from zero,
     - a separating layer system with at least one layer of a predefined material with a predefined thickness, which separates the medium (2) from the illumination objective (5) and the detection objective (7), wherein the separating layer system is in contact with the medium (2) with a base surface (9) aligned parallel to the reference surface (4) at least in the region accessible to the illumination objective (5) and the detection objective (7) for illumination or detection respectively, **characterized in that**
     - the arrangement comprises a correction lens system with at least one correction lens (10, 11, 12) for reducing aberrations which arise due to the oblique passage of illumination light and/or light to be detected through interfaces of the separating layer system, wherein

- the correction lens system is arranged between illumination objective (5) and separating layer system and between detection objective (7) and separating layer system and

- the same at least one correction lens (12) is arranged both in the illumination and in the detection beam path.

2. Arrangement according to claim 1, comprising a further detection beam path with a further detection objective (7'), wherein the at least one correction lens (12) of the correction lens system is also arranged in the further detection beam path.

3. Arrangement according to one of claims 1 or 2, **characterized in that** the correction lens system is formed enlarging and imaging the sample (3).

4. Arrangement according to one of claims 1 to 3, **characterized in that** the correction lens system is composed of a first and a second spherical lens (13, 14).

5. Arrangement according to one of claims 1 to 3, **characterized in that** the correction lens system comprises a lens with at least one aspherical surface.


**Revendications**

1. Système de microscopie à feuille de lumière, comprenant

- une optique d'éclairage dotée d'un objectif d'éclairage (5) destiné à l'éclairage, par le biais d'un trajet de faisceau d'éclairage avec une feuille de lumière, d'un échantillon (3) se trouvant dans un milieu (2) sur un porte-échantillons, le porte-échantillons étant orienté par rapport à une surface de référence (4) horizontale plane, l'axe optique (6) de l'objectif d'éclairage (5) et la feuille de lumière se trouvant dans un plan qui forme un angle d'éclairage (ß) différent de zéro avec la verticale de la surface de référence (4),
- une optique de détection dotée d'un objectif de détection (7) dans un trajet de faisceau de détection, dont l'axe optique (8) forme un angle de détection (δ) différent de zéro avec la verticale de la surface de référence (4),
- un système de couche de séparation comprenant au moins une couche en un matériau prédéfini d'une épaisseur prédéfinie, qui sépare le milieu (2) de l'objectif d'éclairage (5) et de l'objectif de détection (7), le système de couche de séparation étant en contact avec le milieu (2) par une surface de base (9) orientée parallèlement à la surface de référence (4), au moins dans la zone accessible pour l'objectif d'éclairage (5) et l'objectif de détection (7) pour l'éclairage ou respectivement la détection, **caractérisé en ce que**

- le système comprend un système de lentilles correctrices doté d'au moins une lentille correctrice (10, 11, 12) pour diminuer les aberrations qui résultent du passage oblique de la lumière d'éclairage et/ou de la lumière à détecter à travers des surfaces limites du système de couche de séparation, dans lequel

- le système de lentilles correctrices est disposé entre l'objectif d'éclairage (5) et le système de couche de séparation et entre l'objectif de détection (7) et le système de couche de séparation et

- la même au moins une lentille correctrice (12) est disposée aussi bien dans le trajet de faisceau d'éclairage que dans le trajet de faisceau de détection.

2. Système selon la revendication 1, comprenant un autre trajet de faisceau de détection doté d'un autre objectif de détection (7'), l'au moins une lentille correctrice (12) du système de lentilles correctrices étant également disposée dans l'autre trajet de faisceau de détection.

3. Système selon l'une des revendications 1 ou 2, **caractérisé en ce que** le système de lentilles correctrices est conçu de façon à représenter l'échantillon (3) de manière agrandie.

4. Système selon l'une des revendications 1 à 3, **caractérisé en ce que** le système de lentilles correctrices est composé d'une première et d'une seconde lentille sphérique (13, 14).

5. Système selon l'une des revendications 1 à 3, **caractérisé en ce que** le système de lentilles correctrices comprend une lentille dotée d'au moins une surface asphérique.

Fig.1

Fig.4

Fig.2

Fig.3

Fig.5

Fig.6

**EP 3 069 184 B1**

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- EP 0866993 B1
- DE 10257423 A1
- WO 2004053558 A1
- WO 2012110488 A2
- WO 2012122027 A2
- DE 102013107297
- US 4412723 A
- US 20030001071 A1
- US 20040173760 A1

**In der Beschreibung aufgeführte Nicht-Patentliteratur**

- **VON J. HUISKEN et al.** Selective plane illumination microscopy techniques in developmental biology. *Zeitschrift Development,* 2009, vol. 136, 1963
- Simple Method of Correcting the Aberrations of a Beam Splitter in Converging Licht. **VON VICTOR J. DOHERTY ; DAVID SHAFER.** Proc. of SPIE. International Lens Design, 1980, vol. 0237